# EUROPEAN PATENT APPLICATION

(11) **EP 4 755 220 A1**
(43) Date of publication of application: **10.06.2026**
(21) Application number: 24852180.9
(22) Date of filing: 30.07.2024
(51) Int. Cl.: A24F 40/46, A24F 40/50, A24F 40/53, A24F 40/57, A24F 40/95, H02J 7/00, A24F 40/42

(54) **AEROSOL GENERATING DEVICE**

(30) Priority: 04.08.2023 KR 20230102241; 02.01.2024 KR 20240000464
(71) Applicant: KT&G Corporation, Daedeok-gu Daejeon 34337 (KR)
(72) Inventor: JANG, Chul Ho, Bucheon-si, Gyeonggi-do 14725 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/011176
(87) International publication number: WO 2025/033826

(57) **Abstract**

An aerosol generating device according to an embodiment includes a body that includes an article accommodating unit for accommodating an aerosol generating article and forms an exterior thereof; a heater for heating the aerosol generating article accommodated in the article accommodating unit; a battery coupling unit arranged in one area inside the body; and a battery detachably coupled to the battery coupling unit, wherein the battery includes a first electrode and a second electrode having an opposite polarity to that of the first electrode, and the first electrode and the second electrode are disposed on a same first surface of the battery.

## Description

### Technical Field

The present disclosure relates to an aerosol generating device capable of accommodating a removable battery.

### Background Art

In recent years, there has been an increasing demand for alternative methods to overcome the disadvantages of conventional cigarettes. For example, there is an increasing demand for a system that generates aerosols by heating a cigarette (or an 'aerosol generating article') using an aerosol generating device, rather than a method of generating aerosols by burning a cigarette.

An aerosol generating device includes a battery for supplying power and a heater that generates heat as the power is supplied, wherein an aerosol generating material may be heated through the heater to generate aerosols. In particular, the aerosol generating device may use an integrated battery to miniaturize the device, but recently, research on an aerosol generating device using a removable battery has been actively conducted to increase user convenience.

### Disclosure of Invention

### Technical Problem

The battery of an aerosol generating device may be damaged or degraded due to exposure to external foreign substances, such as moisture or dust. When the battery of the aerosol generating device is detached from the aerosol generating device for charging or replacement, it may be exposed to hazards from external foreign substances. In addition, since the external foreign substances can infiltrate the space where the battery is accommodated through a gap in the aerosol generating device even when the battery of the aerosol generating device is accommodated in the aerosol generating device, the battery of the aerosol generating device may still be exposed to hazards from the external foreign substances.

Various embodiments of the present disclosure aim to protect the battery of the aerosol generating device from external foreign substances, thereby preventing damage and/or malfunction of the battery and the aerosol generating device.

Problems to be solved by the embodiments of the present disclosure are not limited to the above-described problems, and problems that are not mentioned will be clearly understood by those skilled in the art from the present specification and the accompanying drawings.

### Solution to Problem

An aerosol generating device according to an embodiment includes a body that includes an article accommodating unit for accommodating an aerosol generating article and forms an exterior thereof; a heater for heating the aerosol generating article accommodated in the article accommodating unit; a battery coupling unit arranged in one area inside the body; and a battery detachably coupled to the battery coupling unit, wherein the battery includes a first electrode and a second electrode having an opposite polarity to the first electrode, and the first electrode and the second electrode are disposed on a same first surface of the battery.

### Advantageous Effects of Invention

Various embodiments of the present disclosure may prevent external foreign substances from reaching an electrode of a battery and a body electrode provided in a body electrically connected to the electrode of the battery, thereby preventing damage and malfunction of the battery and the aerosol generating device in advance.

Effects by the embodiments are not limited to the above-described effects, and effects that are not mentioned will be clearly understood by those skilled in the art from the present specification and the accompanying drawings.

### Brief Description of Drawings

FIG. 1 is a perspective view of an aerosol generating device according to an embodiment of the present disclosure.
FIG. 2 illustrates an aerosol generating device according to various embodiments of the present disclosure.
FIG. 3 illustrates an aerosol generating device according to various embodiments of the present disclosure.
FIG. 4 illustrates an aerosol generating device according to various embodiments of the present disclosure.
FIG. 5 illustrates an aerosol generating device according to various embodiments of the present disclosure.
FIG. 6 illustrates an aerosol generating device according to various embodiments of the present disclosure.
FIG. 7 is a cross-sectional view of an aerosol generating device according to an embodiment of the present disclosure.
FIG. 8 is a diagram illustrating a relationship between a battery and a body according to an embodiment of the present disclosure.
FIG. 9 is a block diagram schematically illustrating an internal configuration of a battery according to an embodiment of the present disclosure.
FIG. 10 is a circuit diagram of a battery control circuit according to an embodiment of the present disclosure.
FIG. 11 is a block diagram of an aerosol generating device according to an embodiment of the present disclosure.

### Best Mode for Carrying out the Invention

### Mode for the Invention

The terms used in embodiments are selected from general terms currently widely used as much as possible in consideration of the functions in the present disclosure, but may vary depending on the intention of those skilled in the art, precedents, the emergence of new technologies, and the like. In addition, in a specific case, there is also a term arbitrarily selected by the applicant, and in this case, the meaning thereof will be described in detail in the corresponding description of the disclosure. Therefore, the terms used in the present disclosure should be defined based on the meaning of the terms and the overall content of the present disclosure, rather than the mere names of the terms.

Throughout the specification, when a part "includes" a component, unless otherwise specified, the part may further include other components, instead of excluding the other components. In addition, terms such as "unit" and "module" described in the specification refers to a unit for processing at least one function or operation, which may be implemented in hardware or software or may be implemented in a combination of hardware and software.

In addition, in describing embodiments disclosed in the present specification, if it is determined that the detailed description of the related known technology may obscure the gist of the embodiments disclosed herein, the detailed description thereof is omitted. In addition, it should be understood that the accompanying drawings are merely for facilitating understanding of the embodiments disclosed in this specification and are not intended to limit the technical concept disclosed in this specification by the accompanying drawings, and include all modifications, equivalents, and alternatives included in the spirit and technical scope of the present disclosure.

Although ordinal terms, such as first, second, and the like, may be used to describe various components, the components are not limited by the terms. The terms are only used for the purpose of distinguishing one component from another.

It should be understood that when a component is referred to as being "connected" or "coupled" to another component, it may be directly connected or coupled to the other component, but there may also be other components in between. In contrast, when a component is referred to as being "directly connected" or "directly coupled" to another component, it should be understood that there are no components in between.

Singular expressions include plural expressions unless the context clearly indicates otherwise.

Hereinafter, embodiments of the present disclosure are described in detail with reference to the accompanying drawings so that those skilled in the art can easily implement the embodiments. However, the present disclosure may be embodied in many different forms and is not limited to the embodiments described herein.

Regardless of the drawing symbols, identical or similar components are given the same reference number and duplicate descriptions thereof are omitted.

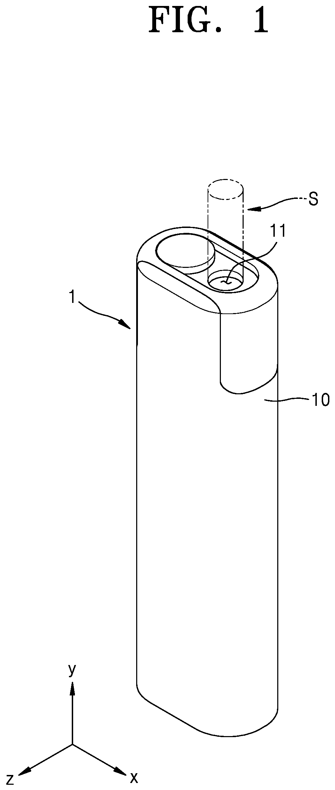

FIG. 1 is a perspective view of an aerosol generating device according to an embodiment of the present disclosure.

An aerosol generating device 1 may generate and provide aerosols.

The aerosol generating device 1 may include a body 10. The body 10 forms the overall exterior of the aerosol generating device 1 and may include a space therein. At least one of an article accommodating unit 11, a heater (not shown), a controller (not shown), and a battery (not shown) may be arranged inside the body 10.

The article accommodating unit 11 may provide a space into which the aerosol generating article S may be detachably coupled (inserted). The aerosol generating article S may include an aerosol generating material that is heated by the heater to generate aerosols. The article accommodating unit 11 may provide a space that is open toward the outside of the body 10 so that the aerosol generating article S is inserted therein.

The article accommodating unit 11 may be recessed toward the inside of the body 10 so that at least a portion of the aerosol generating article S can be inserted. A depth at which the article accommodating unit 11 is recessed may correspond to a length of one area of the aerosol generating article S, where the aerosol generating material and/or the medium is included. A portion of the aerosol generating article S may be inserted into the body 10, and another portion of the aerosol generation article S may protrude toward the outside of the body 10. A user may hold a portion of the aerosol generating article S exposed toward the outside of the body 10 in his/her mouth and inhale air containing the aerosols.

The heater (not shown) arranged inside the body 10 may heat the aerosol generating article S. For example, the heater may include a tubular heating element, a plate-shaped heating element, a needle-shaped heating element or a rod-shaped heating element. The heater may include an electric resistance heater and/or an induction heater.

For example, the heater may be a resistive heater. The heater includes an electrically conductive track, and the heater may be heated as a current flows through the electrically conductive track. The heater may be electrically connected to a power source. The heater may receive power from the power source to generate heat.

For example, the heater may be a multi-heater. The heater may include a first heater and a second heater. The first heater and the second heater may be sequentially heated or may be simultaneously heated.

The aerosol generating device 1 may include an induction coil. The induction coil may heat the heater. The heater may include a susceptor. The susceptor may be heated by a magnetic field generated by an alternating current flowing through the induction coil. The magnetic field may pass through the susceptor and may generate eddy currents inside the susceptor. The eddy currents may cause the susceptor to generate heat.

For another example, the susceptor may be included inside the aerosol generating article S. The susceptor inside the aerosol generating article S may be heated by the magnetic field generated by the alternating current flowing through the induction coil. The susceptor may be arranged inside the aerosol generating article S and may not be electrically connected to the aerosol generating device 1. The susceptor may be inserted into the article accommodating unit 11 together with the aerosol generating article S and may be detached from the article accommodating unit 11 together with the aerosol generating article S. When the alternating current flows through the induction coil, the aerosol generating article S may be heated by the susceptor inside the aerosol generating article S.

The power source may supply power to operate the components of the aerosol generating device 1. The power source may be a battery capable of storing power. The power source may supply power to components, such as the heater, the induction coil, and the controller.

The controller may control the overall operation of the aerosol generating device 1. The controller may be mounted to a printed circuit board (PCB). The controller may control operations of components, such as the heater, the induction coil, and the power source. The controller may control operations of a display, an actuator (motor), and the like provided in the aerosol generating device 1. The controller may confirm a state of each of the components of the aerosol generating device 1 to determine whether the aerosol generating device 1 is in an operable state.

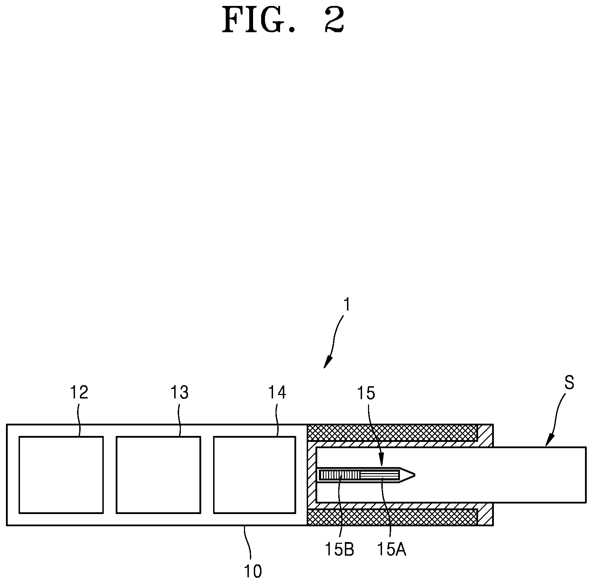

FIGS. 2 to 4 illustrate an aerosol generating device according to various embodiments of the present disclosure.

Referring to FIG. 2, the aerosol generating device 1 according to embodiments of the present disclosure may include at least one of a battery 12, a controller 13, a sensor unit 14, and a heater 15. At least one of the battery 12, the controller 13, the sensor unit 14, and the heater 15 may be arranged inside a body 10 of the aerosol generating device 1.

The body 10 may provide a space opened on one side thereof to allow the aerosol generating article S to be inserted. The space opened to the one side may be referred to as an article accommodating unit. The article accommodating unit may be formed to be recessed by a predetermined depth toward the inside of the body 10 so that at least a portion of the aerosol generating article S can be inserted. The depth of the article accommodating unit may correspond to the length of an area of the aerosol generating article S, where the aerosol generating material and/or the medium is included. A lower end of the aerosol generating article S may be inserted into the body 10, and a portion of the aerosol generating article S may protrude to the outside of the body 10. The user may hold a portion of the aerosol generating article S exposed to the outside in his/her mouth and inhale air.

The heater 15 may heat the aerosol generating article S. The heater 15 may extend outward in the longitudinal direction of the space into which the aerosol generating article S is inserted. For example, the heater 15 may include a tubular heating element, a plate-shaped heating element, a needle-shaped heating element, or a rod-shaped heating element. The heater 15 may be inserted into one end of the aerosol generating article S. The heater 15 may include an electric resistance heater and/or an induction heater.

For example, referring to FIG. 2, the heater 15 may be a resistive heater. For example, the heater 15 includes an electrically conductive track, and the heater 15 may be heated as a current flows through the electrically conductive track. The heater 15 may be electrically connected to the battery 12. The heater 15 may directly generate heat by receiving the current from the battery 12.

For example, the heater 15 may be a multi-heater. The heater 15 may include a first heater 15A and a second heater 15B. The first and second heaters 15A and 15B may be arranged side by side in the longitudinal direction. The first and second heaters 15A and 15B may be sequentially heated or may be simultaneously heated.

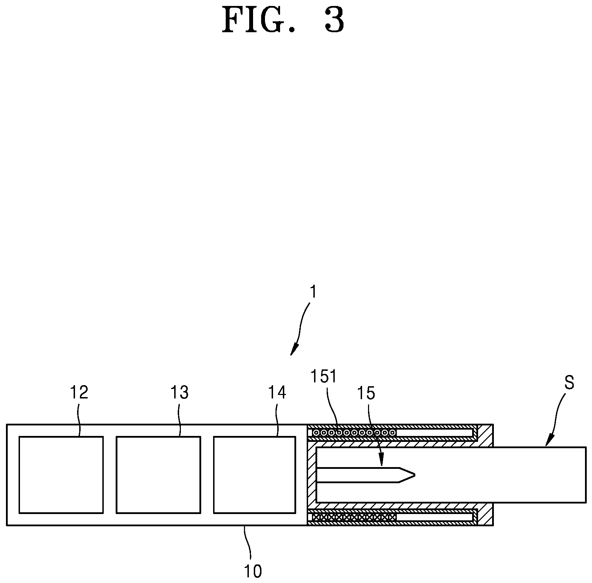

For example, referring to FIG. 3, the aerosol generating device may include an induction coil 151 surrounding the heater 15. The induction coil 151 may cause the heater 15 to generate heat. The heater 15 is a susceptor, and the heater 15 may be heated by a magnetic field generated by an AC current flowing through the induction coil 151. The magnetic field may pass through the heater 15 and may generate eddy currents in the heater 15. The current may generate heat in the heater 15.

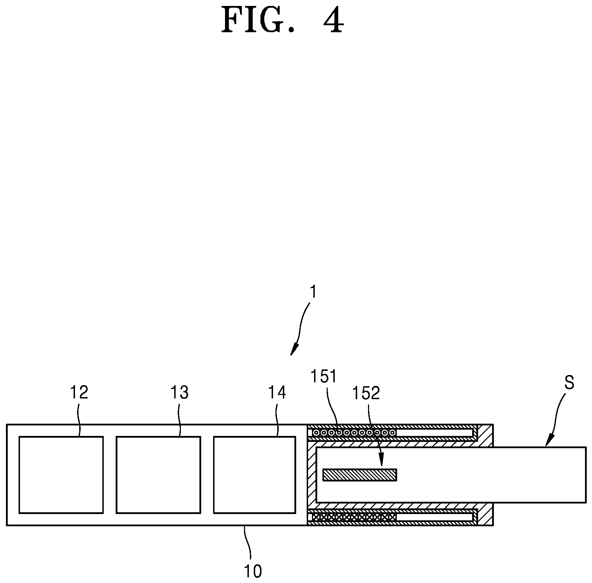

For example, referring to FIG. 4, a susceptor 152 may be included in the aerosol generating article S, and the susceptor 152 inside the aerosol generating article S may be heated by the magnetic field generated by the AC current flowing through the induction coil 151. The susceptor 152 may be arranged inside the aerosol generating article S and may not be electrically connected to the aerosol generating device 1. The susceptor 152 may be inserted into the article accommodating unit together with the aerosol generating article S and may be detached from the article accommodating unit together with the aerosol generating article S. The aerosol generating article S may be heated by the susceptor 152 inside the aerosol generating article S. At this time, the aerosol generating device may not include the heater 15.

The battery 12 may supply power to operate the components of the aerosol generating device 1. The battery 12 may supply power to at least one of the controller 13, the sensor unit 14, and the heater 15. The battery 12 may supply power to the induction coil 151.

The controller 13 may control the overall operation of the aerosol generating device 1. The controller 13 may be mounted on the PCB. The controller 13 may control the operation of at least one of the battery 12, the sensor unit 14, and the heater 15. The controller 13 may control the operation of the induction coil 151. The controller 13 may control operations of the display, the actuator (motor), and the like provided in the aerosol generating device 1. The controller 13 may confirm a state of each of the components of the aerosol generating device 1 to determine whether the aerosol generating device 1 is in an operable state.

The controller 13 may analyze the results sensed by the sensor unit 14, and then control processes to be performed. For example, the controller 13 may control, based on the results sensed by the sensor unit 14, power supplied to the heater 15 such that the operation of the heater 15 is initiated or ended. For example, the controller 13 may control, based on the results sensed by the sensor unit 14, the amount of power supplied to the heater 15 and the time for which the power is supplied so that the heater 15 is heated to a predetermined temperature or maintained at an appropriate temperature.

The sensor unit 14 may include at least one of a temperature sensor, a puff sensor, an insertion sensor, and an acceleration sensor. For example, the sensor unit 14 may sense at least one of a temperature of the heater 15, a temperature of the battery 12, and a temperature inside and outside the body 10. For example, the sensor unit 14 may sense the user's puff. For example, the sensor unit 14 may sense whether the aerosol generating article S is inserted into the article accommodating unit. For example, the sensor unit 14 may sense movement of the aerosol generating device 1.

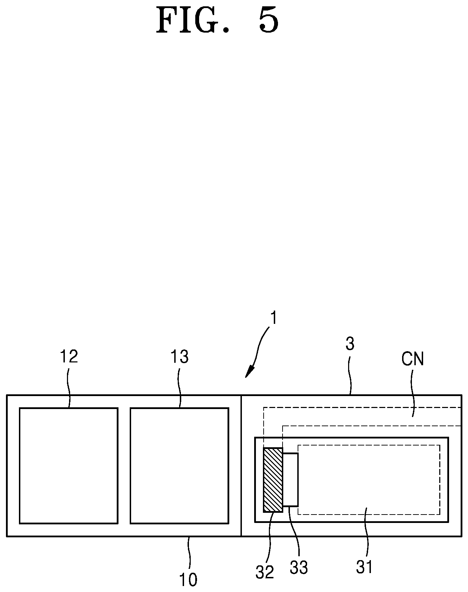

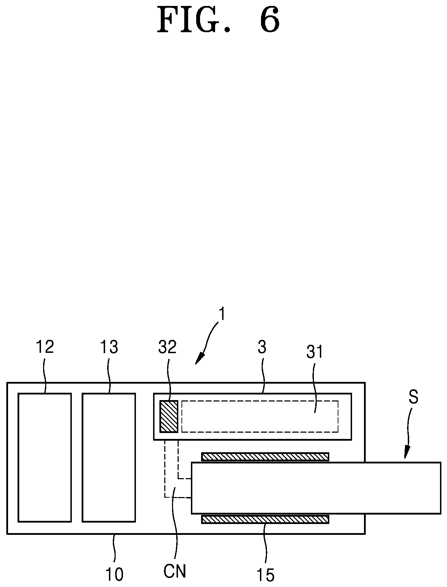

FIGS. 5 and 6 illustrate the aerosol generating device 1 according to various embodiments of the present disclosure.

Referring to FIG. 5, the aerosol generating device 1 may include a cartridge 3 and a body 10. The aerosol generating device 1 may include at least one of a battery 12, a controller 13, and a sensor (not shown). At least one of the controller 13 and the battery 12 may be arranged inside the body 10. The body 10 may be equipped with a cartridge 3 containing an aerosol generating material. The user may inhale aerosols with a mouthpiece (not shown) provided at one end of the cartridge 3.

A storage space inside the cartridge 3 may contain the aerosol generating material having any state, such as a liquid state, a solid state, a gaseous state, or a gel state. The aerosol generating material may include a liquid composition. For example, the liquid composition may be a liquid containing a tobacco-containing material including a volatile tobacco flavor component, and may also be a liquid containing a non-tobacco material.

The cartridge 3 may be detachably coupled to the body 10. The cartridge 3 may be mounted on the body 10 by being coupled to the body 10.

The body 10 may be formed in a structure in which outside air can be introduced into the interior of the body 10 while the cartridge 3 is coupled thereto. At this time, the outside air introduced into the body 10 may flow through the cartridge 3 to the oral cavity of the user through an airflow channel CN.

The cartridge 3 may include an atomizer 32 and/or a storage space 31 containing the aerosol generating material. The atomizer 32 may heat the aerosol generating material in the storage space 31. The cartridge 3 may include a liquid transfer means 33 capable of absorbing the aerosol generating material. The liquid transfer means 33 may include cotton fibers, ceramic fibers, glass fibers, wicks, such as porous ceramics, and the like. The electrically conductive track of the atomizer 32 may be formed in a structure of a coil winding the liquid transfer means 33 or a structure in contact with one side of the liquid transfer means 33. The atomizer 32 may be referred to as a "cartridge heater".

The cartridge 3 may generate aerosols. As the liquid transfer means 33 is heated by the atomizer 32, aerosols may be generated. The generated aerosols may be inhaled into the oral cavity of the user through the airflow channel CN.

The airflow channel CN may be provided in the cartridge 3. The airflow channel CN may connect the atomizer 32 of the cartridge 3 to the outside of the cartridge 3. One end of the airflow channel CN may be opened to the atomizer 32, and the other end thereof may be connected to the outside. For example, the airflow channel CN may extend long in the longitudinal direction of the cartridge 3 on one side of the storage space 31 of the cartridge 3. For example, the airflow channel CN may pass through the cartridge 3 and extend long in the longitudinal direction of the cartridge 3.

Referring to FIG. 6, the aerosol generating article S may be accommodated in the aerosol generating device 1 according to an embodiment. For example, the aerosol generating article S may be accommodated in the body 10.

The aerosol generating article S may pass the aerosols generated from the atomizer 32. The aerosol generating device 1 may include the article accommodating unit that accommodates the aerosol generating article S, and the aerosols generated inside the atomizer 32 may be discharged to the outside of the aerosol generating device 1 through the aerosol generating article S accommodated in the article accommodating unit. At this time, the user may bring his/her mouth into contact with the aerosol generating article S and inhale the aerosols discharged to the outside of the aerosol generating device 1 through the aerosol generating article S.

Referring to FIG. 6, the aerosol generating device 1 may further include the heater 15 for heating the aerosol generating article S. The heater 15 may heat the aerosol generating article S. The heater 15 may be arranged around a space into which the aerosol generating article S is inserted. The heater 15 may include an electric resistance heater and/or an induction heater.

The controller 13 may control the overall operation of the aerosol generating device 1. The controller 13 may be disposed on the PCB. The controller 13 may control the operation of at least any one of the cartridge 3, the battery 12, and the sensor. For example, the controller 13 may control operations of a display (not shown), an audio output device (not shown), a haptic unit (not shown), and an actuator (motor) provided in the aerosol generating device 1. The controller 13 may confirm a state of each of the components of the aerosol generating device 1 to determine whether the aerosol generating device 1 is in an operable state.

The controller 13 may analyze the results sensed by the sensor, and then control processes to be performed. For example, the controller 13 may control, based on the results sensed by the sensor, power supplied to the atomizer 32 to start or end the operation of the atomizer 32. For example, the controller 13 may control, based on the results sensed by the sensor, the amount of power supplied to the atomizer 32 and the time for which the power is supplied so that the atomizer 32 can be heated to a predetermined temperature or maintained at an appropriate temperature.

The battery 12 may supply power to components of the aerosol generating device 1. For example, the battery 12 may provide electric energy to at least one of the controller 13, the sensor (not shown), and the heater 15.

The sensor may include at least one of a temperature sensor, a puff sensor, a cartridge sensing sensor, and a movement sensing sensor. For example, the sensor may sense at least one of the temperature of the heater 15, the temperature of the atomizer 32, the temperature of the battery 12, and the temperature inside and outside the body 10. For example, the sensor may sense a puff of the user. For example, the sensor may sense whether the cartridge is mounted. For example, the sensor may sense movement of the aerosol generating device 1.

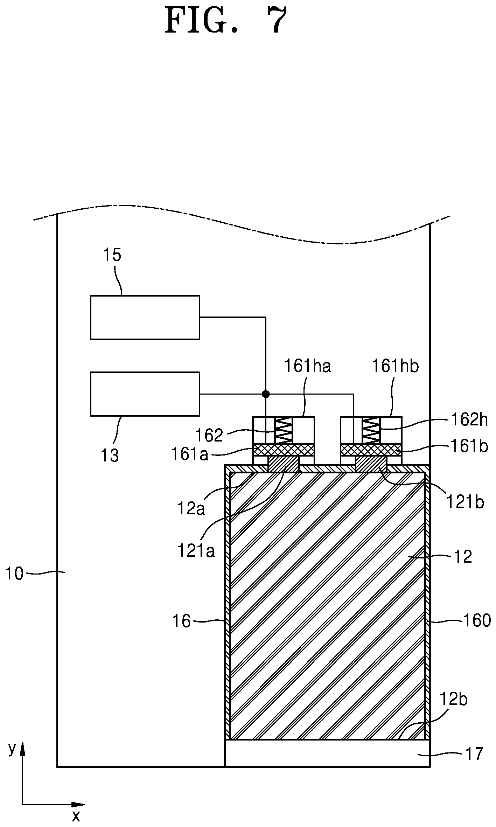

FIG. 7 is a diagram of an aerosol generating device according to an embodiment of the present disclosure. FIG. 7 is a schematic cross-sectional view illustrating in detail the components related to a battery 12, a battery coupling unit 16, and a battery cover 17 of the aerosol generating device 1.

The aerosol generating device 1 of the present embodiment may include, but is not limited to, the same components as those of the aerosol generating device 1 according to any one of embodiments described with reference to FIGS. 1 to 6. To avoid redundant description, the description of the same or similar components as those of the aerosol generating device 1 of any one of embodiments described with reference to FIGS. 1 to 6 may be omitted.

The size, volume, and thickness of components and the distance and ratio between components shown in the drawings of the present disclosure may be exaggerated for convenience of description. The technical idea of the present disclosure is not limited by the physical size, volume, and thickness ratio of the components shown in the drawings.

The aerosol generating device 1 may include a body 10. The body 10 forms an exterior and may include a space therein.

The aerosol generating device 1 may further include a removable battery 12, a controller 13, a heater 15, a battery coupling unit 16, a sealing member 160, and a battery cover 17.

The battery 12 may be detachably coupled to the battery coupling unit 16. The battery 12 may include a battery electrode 121. The battery electrode 121 of the battery 12 may supply power to other components of the aerosol generating device 1. The battery electrode 121 may include a first electrode 121a and a second electrode 121b. The first electrode 121a and the second electrode 121b may have polarities opposite to each other.

The shape of the battery 12 is not limited. The battery 12 may be in the shape of one of polyhedrons. For example, the battery 12 may have a cuboid shape but is not limited thereto. When the battery 12 has a cuboid shape, a first surface 12a and a second surface 12b may face in opposite directions. The first surface 12a and the second surface 12b of the battery 12 may be opposite to each other.

The battery 12 may have the shape of an elliptical cylinder. The battery 12 may be in the shape of a cylinder. When the battery 12 has a shape of an elliptical cylinder or a cylinder, the first surface 12a and the second surface 12b may be the top surface or the bottom surface of the battery 12, respectively. The first surface 12a and the second surface 12b may face in opposite directions. The first surface 12a and the second surface 12b of the battery 12 may be opposite to each other.

With reference to the aerosol generating device shown in FIG. 7, the first surface 12a of the battery 12 may be a surface facing a +y direction, and the second surface 12b of the battery 12 may be a surface facing a -y direction.

In an embodiment, the first electrode 121a and the second electrode 121b may be disposed on the same first surface 12a of the battery 12. When the first electrode 121a and the second electrode 121b are disposed on the same surface of the battery 12, an area exposed to external foreign substances, such as moisture, may be relatively reduced, compared to when the first electrode 121b and the second electrode 12b are distributed and arranged on the first surface 12a and the second surface 12b of the battery 12, respectively.

The battery coupling unit 16 may include a space for coupling the battery 12. The battery coupling unit 16 may be arranged in one area inside the body 10.

The battery coupling unit 16 may include a plurality of receiving grooves 161ha and 161hb for accommodating the electrodes 121a and 121b of the battery 12 and body electrodes 161a and 161b.

Specifically, the first electrode receiving groove 161ha may accommodate a portion of the first electrode 121a, the first body electrode 161a electrically connected to the first electrode 121a, and an elastic receiving groove 162h.

The second electrode receiving groove 161hb may accommodate a portion of the second electrode 121b, the second body electrode 161b electrically connected to the second electrode 121b, and the elastic receiving groove 162h.

The elastic receiving groove 162h may receive a plurality of elastic bodies 162 connected to each of the first body electrode 161a and the second body electrode 161b.

A body electrode 161 is configured to be electrically connected to the battery 12. The body electrode 161 may receive electric energy from the battery 12 and transfer the electric energy to another component of the aerosol generating device 1. For example, at least some of the controller 13, the sensor unit (not shown), and the heater 15 may be supplied with electric energy from the battery 12 through the body electrode 161.

The aerosol generating device 1 may further include the sealing member 160 between the battery coupling unit 16 and the battery. The sealing member 160 may include an insulating rubber, a polyurethane resin, or the like. The sealing member 160 may expose the first electrode 121a and the second electrode 121b. The sealing member 160 may expose the second surface 12b of the battery 12. The sealing member 160 may pressurize and seal the other components of the battery 12 than the first electrode 121a, the second electrode 121b, and the second surface 12b of the battery 12. The sealing member 160 may block external foreign substances from reaching the first electrode 121a and the second electrode 121b of the battery 12 or from reaching the plurality of receiving grooves 161ha and 161hb.

The aerosol generating device 1 may include the battery cover 17 capable of selectively opening or closing the battery coupling unit 16. The battery cover 17 may be detachably coupled to the body 10.

Referring to FIG. 7, the battery 12 is arranged inside the battery coupling unit 16, the battery cover 17 is in a closed position, and the battery cover 17 closes the battery coupling unit 16 such that the battery 12 is not discharged to the outside.

The battery cover 17 may be arranged in one area of the body 10. The battery cover 17 may be arranged in one area corresponding to the battery coupling unit 16. For example, the battery cover 17 may be detachably coupled to the battery coupling unit 16 in a position where it is open toward the -y direction.

Referring to FIG. 7, the battery cover 17 may extend in a direction transverse to the longitudinal direction ±y of the body 10. The battery cover 17 may open or close the battery coupling unit 16 in the longitudinal direction of the body 10.

The battery cover 17 may be moved to the closed position to close the battery coupling unit 16 so that the battery coupling unit 16 can be closed from the outside. The battery cover 17 may be moved out of the closed position to open the battery coupling unit 16 toward the outside.

The battery cover 17 may be coupled to the body 10 in the closed position to close the battery coupling unit 16. The battery cover 17 may be detached from the body 10 by being out of the closed position.

When the battery cover 17 is moved to the closed position to be coupled to the body 10, the battery coupling unit 16 may be closed to the outside, the battery 12 may not be coupled to or detached from the battery coupling unit 16, and foreign substances outside the aerosol generating device 1 may be blocked from reaching the battery coupling unit 16.

When the battery cover 17 is detached from the body 10, the battery coupling unit 16 is open toward the outside so that the battery 12 can be coupled to the battery coupling unit 16 or the battery 12 can be removed from the battery coupling unit 16.

The aerosol generating device 1 may further include a plurality of elastic bodies 162 connected to each of the first body electrode 161a and the second body electrode 161b. The plurality of elastic bodies 162 may apply an elastic force such that the first body electrode 161a and the second body electrode 161b are pressed toward the battery 12. The elastic bodies 162 may allow the body electrode 161 to more stably contact and/or couple with the battery electrode 121 of the battery 12. The elastic bodies 162 allow the body electrode 161 to be more stably electrically connected to the battery electrode 121 of the battery 12.

The body electrode 161 may include a pogo pin pressed by the elastic bodies 162 or may be the pogo pin itself.

The elastic bodies 162 may stably secure the battery 12 in the battery coupling unit 16 without shaking. The size of the battery 12 coupled to the battery coupling unit 16 may vary for each battery 12. Since the elastic bodies 162 are arranged, the battery 12 may be stably arranged in the battery coupling unit 16 regardless of the size of the battery 12. By arranging the elastic bodies 162, the degree of freedom in the size of the battery 12 that can be coupled to the battery coupling unit 16 may be improved.

The elastic bodies 162 may press the battery 12 coupled to the battery coupling unit 16. The elastic bodies 162 may be arranged inside the battery coupling unit 16.

The aerosol generating device 1 may further include a cradle (not shown). The aerosol generating device 1 may constitute a system together with a separate cradle. The cradle may include a charger capable of charging the battery 12. For example, the cradle may charge the battery 12 of the aerosol generating device 1. Alternatively, the heater 15 may be heated while the cradle is coupled to the aerosol generating device 1.

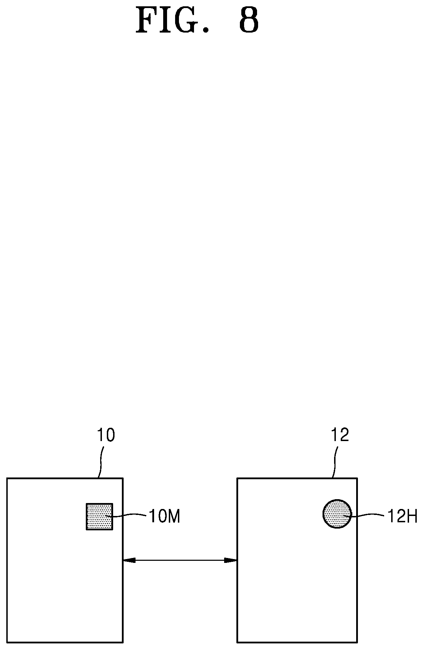

FIG. 8 is a diagram illustrating a relationship between a battery and a body according to an embodiment of the present disclosure.

Referring to FIG. 8, the body 10 may include a magnet 10M, and the battery 12 may include a Hall sensor 12H. The Hall sensor 12H may sense a magnetic field formed by the magnet 10M. The battery 12 may supply electric energy to the body 10 when the magnetic field is sensed by the Hall sensor 12H, and the battery 12 may cut off the electric energy to be supplied from the battery 12 to the body 10 when the magnetic field is not sensed by the Hall sensor 12H. Since the magnet 10M is arranged in the body 10 and the Hall sensor 12H is arranged in the battery 12, the battery 12 must be coupled with the body 10 so that the magnetic field is sensed by the Hall sensor 12 H.

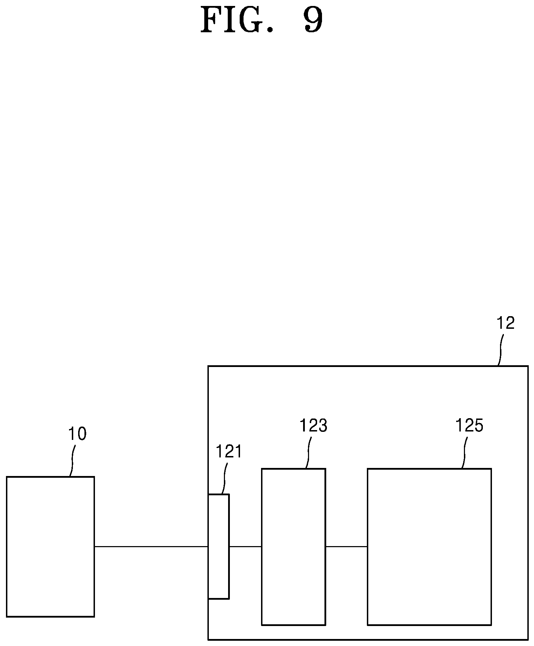

FIG. 9 is a block diagram schematically illustrating an internal configuration of a battery according to an embodiment of the present disclosure.

It is a block diagram schematically illustrating an internal configuration of the battery 12 according to an embodiment of the present disclosure. Referring to this, the battery 12 includes a battery cell 125 and a battery control circuit 123. The battery 12 also includes an electrode 121 for supplying electric energy charged in the battery cell 125 to the body 10.

The battery control circuit 123 is a circuit that supplies electric energy stored in the battery cell 125 to the body 12 through the electrode 121. The battery according to the prior art is configured such that the battery cell 125 is always connected to the electrode 121. Therefore, when the battery 12 is mounted on the body 12, electricity is supplied from the battery cell 125 to the body 12 through the electrode 121, and although the battery 12 is not mounted on the body 12, electricity may be discharged from the battery cell 125 when the electrode 121 comes into contact with water or a conductor.

To eliminate this problem, the battery control circuit 123 according to an embodiment of the present disclosure is configured to electrically connect the electrode 121 to the battery cell 125, when the battery 10 is mounted on the body 12, and electrically disconnect the electrode 121 from the battery cell 125 when the battery cell 125 is disconnected from the body 12.

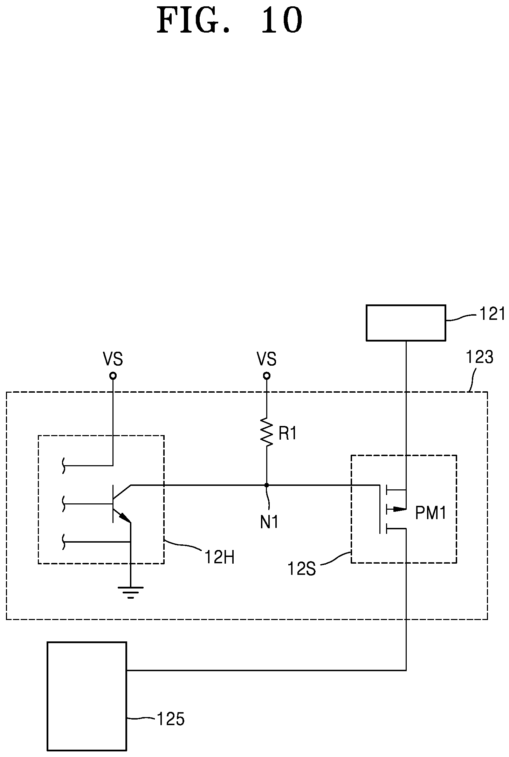

FIG. 10 is a circuit diagram of a battery control circuit according to an embodiment of the present disclosure.

The battery control circuit 123 includes a Hall sensor 12H, a switching circuit 12S, and a resistance element R1.

The Hall sensor 12H may sense a magnetic field formed by the magnet (magnet 10M of Fig. 8) mounted on the body 10. The switching circuit 12S may electrically connect the electrode 121 to the battery cell 125 in response to the Hall sensor 12H sensing the magnetic field, thereby allowing electricity to be supplied to the body 12 through the electrode 121. The switching circuit 12S includes a switching element PM1. The switching element PM1 may be used as various switching elements, such as a relay switch and a transistor, but the relay switch has the disadvantage of being larger than the transistor. Thus, the transistor is preferably used as a switch element. In an embodiment, the switching element PM1 may be configured as a P-channel field effect transistor (P-channel MOSFET, hereinafter referred to as a PMOS transistor).

When the battery 12 is coupled to the body 12 and a magnetic field of a certain reference value or greater is sensed by the magnet in the Hall sensor 12H, the transistor in the Hall sensor 12H is turned on and the current supplied through the resistance R1 flows through the transistor in the Hall sensor 12H. Thus, the potential of a first node N1 approaches 0 V, thereby turning on the switching element PM1. When the switching element PM1 is turned on, the battery cell 125 is electrically connected to the electrode 121 through the turned-on switching element PM1. Thus, a discharge path from the battery cell 125 through the electrode 121 is formed.

On the other hand, since a magnetic field is not sensed by the Hall sensor 12H or a magnetic field less than the reference value is sensed when the battery 12 is not coupled to the body 12, the transistor of the Hall sensor 12 H remains in a turned-off state. Therefore, the potential of the first node N1 becomes high level and the switching element PM1 is turned off. When the switching element PM1 is in the turned-off state, the gap between the battery 125 and the electrode 121 is open so that a discharge path may not be formed from the battery cell 125 through the electrode 121.

According to the battery control circuit 123, the discharge path of the battery cell 125 is formed only when the battery 12 is connected to the body 12, thereby providing the electric energy from the battery 12 to the body 12. On the other hand, when the battery 12 is not coupled to the body 12, the discharge path of the battery cell 125 is not formed. Therefore, although the battery 12 is abnormally separated from the body 10, the discharge path from the battery cell 125 is not formed, thereby preventing the possibility of damage to the battery circuit due to contact with the conductor.

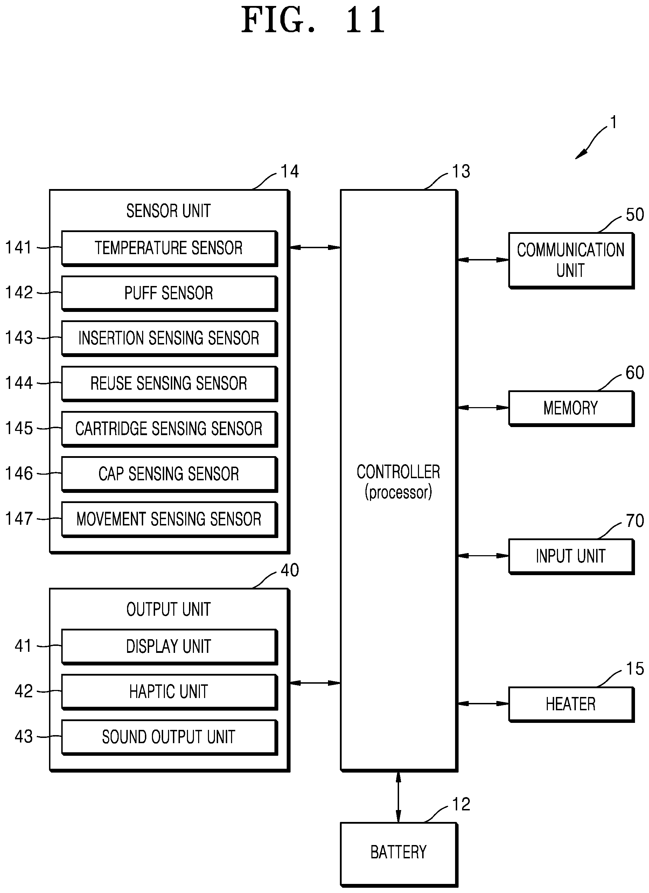

FIG. 11 is a block diagram of an aerosol generating device according to an embodiment of the present disclosure.

The aerosol generating device 1 may include a battery 12, a controller 13, a sensor unit 14, an output unit 40, an input unit 70, a communication unit 50, memory 60, and at least one aerosol generator 15. The aerosol generator 15 may be a stick heater and/or a cartridge heater. However, the internal structure of the aerosol generating device 1 is not limited to that shown in FIG. 11. That is, those skilled in the art may understand that, according to the design of the aerosol generating device 1, some of the components shown in FIG. 11 may be omitted or new components may be further added.

The sensor unit 14 may sense a state of the aerosol generating device 1 or a state around the aerosol generating device 1 and may transfer the sensed information to the controller 13. Based on the sensed information, the controller 13 may control the aerosol generating device 1 to perform various functions, such as controlling the operation of the cartridge heater and/or the stick heater, limiting smoking, determining whether to insert the stick and/or the cartridge 19, displaying a notification, and the like.

The sensor unit 14 may include at least one of a temperature sensor 141, a puff sensor 142, an insertion sensing sensor 143, a reuse sensing sensor 144, a cartridge sensing sensor 145, a cap sensing sensor 146, and a movement sensing sensor 147.

The temperature sensor 141 may sense a temperature at which the cartridge heater and/or the stick heater is heated. The aerosol generating device 1 may include a separate temperature sensor that senses the temperature of the cartridge heater and/or the stick heater, or the cartridge heater and/or the stick heater may function as the temperature sensor.

The temperature sensor 141 may output a signal corresponding to the temperature of the cartridge heater and/or the stick heater. For example, the temperature sensor 141 may include a resistance element whose resistance value changes in response to a temperature change of the cartridge heater and/or the stick heater. It may be implemented by a thermistor, which is an element utilizing the property of its resistance changing depending on the temperature. At this time, the temperature sensor 141 may output a signal corresponding to the resistance value of the resistance element as a signal corresponding to the temperature of the cartridge heater and/or the stick heater. For example, the temperature sensor 141 may be configured as a sensor that detects the resistance value of the cartridge heater and/or the stick heater. At this time, the temperature sensor 141 may output a signal corresponding to the resistance value of the cartridge heater and/or the stick heater as a signal corresponding to the temperature of the cartridge heater and/or the stick heater.

The temperature sensor 141 may be arranged around the battery 12 to monitor the temperature of the battery 12. The temperature sensor 141 may be arranged adjacent to the battery 12. For example, the temperature sensor 141 may be attached to one surface of the battery 12. For example, the temperature sensor 141 may be mounted on one surface of the PCB.

The temperature sensor 141 may be arranged inside the body 10 to sense the internal temperature of the body 10.

The puff sensor 142 may sense the user's puff based on various physical changes in the airflow path. The puff sensor 142 may output a signal corresponding to the puff. For example, puff sensor 142 may be a pressure sensor. The puff sensor 142 may output a signal corresponding to the internal pressure of the aerosol generating device 1. The internal pressure of the aerosol generating device 1 may correspond to the pressure of the airflow path through which the gas flows. The puff sensor 142 may be arranged in the aerosol generating device 1, corresponding to the airflow path through which the gas flows.

The insertion sensing sensor 143 may sense insertion and/or removal of the stick. The insertion sensing sensor 143 may sense signal changes as the stick is inserted and/or removed. The insertion sensing sensor 143 may be arranged around the insertion space. The insertion sensing sensor 143 may sense insertion and/or removal of the stick according to a change in dielectric constant inside the insertion space. For example, the insertion sensing sensor 143 may be an inductive sensor and/or a capacitance sensor.

The inductive sensor may include at least one coil. The coil of the inductive sensor may be arranged adjacent to the insertion space. For example, when the magnetic field changes around the coil through which the current flows, the characteristics of the current flowing through the coil may change, according to Faraday's law. The characteristics of the current flowing through the coil may include a frequency, a current value, a voltage value, an inductance value, and an impedance value of the alternating current.

The inductive sensor may output a signal corresponding to the characteristics of the current flowing through the coil. For example, the inductive sensor may output a signal corresponding to the inductance value of the coil.

The capacitance sensor may include a conductor. The conductor of the capacitance sensor may be arranged adjacent to the insertion space. The capacitance sensor may output a signal corresponding to electromagnetic characteristics of the surroundings, for example, the electrostatic capacitance around the conductor. For example, when the stick including a wrapper of a metal material is inserted into the insertion space, the electromagnetic characteristics around the conductor may be changed by the wrapper of the stick.

The reuse sensing sensor 144 may sense whether the stick is reused. The reuse sensing sensor 144 may be a color sensor. The color sensor may sense the color of the stick. The color sensor may sense the color of a portion of the wrapper that wraps around the exterior of the stick. The color sensor may detect, based on light reflected from the object, a value for optical characteristics corresponding to the color of the object. For example, the optical characteristics may be wavelengths of light. The color sensor may be implemented as a single component with the proximity sensor or may be implemented as a separate component from the proximity sensor.

At least a portion of the wrapper constituting the stick may be changed in color by aerosols. The reuse sensing sensor 144 may be arranged corresponding to a position where at least a portion of the wrapper that changes color due to the aerosols is arranged when the stick is inserted into the insertion space. For example, before the stick is used by the user, the color of at least a portion of the wrapper may be a first color. At this time, as at least a portion of the wrapper is wetted by the aerosols while the aerosols generated by the aerosol generating device 1 pass through the stick, the color of at least a portion thereof may be changed to a second color. On the other hand, the color of at least a portion of the wrapper may remain in the second color after changing from the first color to the second color.

The cartridge sensing sensor 145 may sense mounting and/or removal of the cartridge 19. The cartridge sensing sensor 145 may be implemented by an inductance-based sensor, a capacitive sensor, a resistive sensor, a Hall sensor (Hall IC) using a Hall effect, or the like.

The cap sensing sensor 146 may sense mounting and/or removal of the cap. When the cap is separated from the body 10, a portion of the body 10 and the cartridge 19 covered by the cap may be exposed to the outside. The cap sensing sensor 146 may be implemented by a contact sensor, a Hall sensor (Hall IC), an optical sensor, or the like.

The movement sensing sensor 147 may sense movement of the aerosol generating device. The movement sensing sensor 147 may be implemented as at least one of an acceleration sensor and a gyro sensor.

The sensor unit 14 may further include at least one of a humidity sensor, a barometric pressure sensor, a magnetic sensor, a position sensor (GPS), and a proximity sensor, in addition to the sensors 141 to 147 described above. Since the function of each sensor can be intuitively inferred by those skilled in the art from its name, detailed description thereof may be omitted.

The output unit 40 may output and provide information about a state of the aerosol generating device 1 to the user. The output unit 40 may include, but is not limited to, at least one of a display unit 41, a haptic unit 42, and an audio output unit 43. When the display unit 41 and the touchpad form a layered structure to form a touch screen, the display unit 41 may be used as an input device in addition to an output device.

The display unit 41 may visually provide information about the aerosol generating device 1 to the user. For example, the information about the aerosol generating device 1 may refer to various information, such as a charge/discharge state of the battery 12 of the aerosol generating device 1, a preheating state of the stick heater, an insertion/removal state of the stick and/or the cartridge 19, a mounting/removal state of the cap, or a state in which use of the aerosol generating device 1 is limited (e.g., abnormal article sensing), wherein the display unit 41 may output the information to the outside. For example, the display unit 41 may be in the form of an LED light emitting element. For example, the display unit 41 may be a liquid crystal display panel (LCD), an organic light-emitting display panel (OLED), or the like.

The haptic unit 42 may convert an electrical signal into a mechanical stimulus or an electrical stimulus to tactilely provide information about the aerosol generating device 1 to the user. For example, the haptic unit 42 may generate vibrations corresponding to the completion of the initial preheating when the initial power is supplied to the cartridge heater and/or the stick heater for a set time. The haptic unit 42 may include a vibration motor, a piezoelectric element, or an electrical stimulation device.

The audio output unit 43 may audibly provide information about the aerosol generating device 1 to the user. For example, the audio output unit 43 may convert an electrical signal into an acoustic signal and output the acoustic signal to the outside.

The battery 12 may supply power used to operate the aerosol generating device 1. The battery 12 may supply power to heat the cartridge heater and/or the stick heater. In addition, the battery 12 may supply power necessary for operations of the sensor unit 14, the output unit 40, the input unit 70, the communication unit 50, and the memory 60, which are other components included in the aerosol generating device 1. The battery 12 may be a rechargeable battery or a disposable battery. For example, the battery 12 may be, but is not limited to, a lithium polymer (LiPoly) battery.

Although not shown in FIG. 11, the aerosol generating device 1 may further include a power source protection circuit. The power source protection circuit may be electrically connected to the battery 12 and may include a switching element.

The power source protection circuit may cut off the electric path to the battery 12 according to a certain condition. For example, the power source protection circuit may cut off the electric path to the battery 12 when the voltage level of the battery 12 is greater than or equal to a first voltage corresponding to overcharge. For example, the power source protection circuit may cut off the electric path to the battery 12 when the voltage level of the battery 12 is less than a second voltage corresponding to over-discharge.

The stick heater may be powered by the battery 12 to heat the aerosol generating material or the medium in the stick. Although not shown in FIG. 11, the aerosol generating device 1 may further include a power conversion circuit (for example, a DC/DC converter) that converts power of the battery 12 and supplies the power to the cartridge heater and/or the stick heater. In addition, when the aerosol generating device 1 generates aerosols by inductive heating, the aerosol generating device 1 may further include a DC/AC converter configured to convert a direct current power of the battery 12 into an alternating current power.

The controller 13, the sensor unit 14, the output unit 40, the input unit 70, the communication unit 50, and the memory 60 may be powered by the battery 12 to perform functions. Although not shown in FIG. 11, it may further include a power conversion circuit, e.g., a low dropout (LDO) circuit or a voltage regulator circuit, which converts and supplies power of the battery 12 to the respective components. Although not shown in FIG. 11, a noise filter may be provided between the battery 12 and the stick heater. The noise filter may be a low pass filter. The low pass filter may include at least one inductor and a capacitor. The cutoff frequency of the low pass filter may correspond to the frequency of the high-frequency switching current applied from the battery 12 to the stick heater. The low pass filter may prevent a high-frequency noise component from being applied to the sensor unit 14, such as the insertion sensing sensor 143.

In an embodiment, the cartridge heater and/or the stick heater may be formed of any suitable electrically resistive material. For example, the suitable electrically resistive material may be a metal or a metal alloy including, but not limited to, titanium, zirconium, tantalum, platinum, nickel, cobalt, chromium, hafnium, niobium, molybdenum, tungsten, tin, gallium, manganese, iron, copper, stainless steel, nichrome, and the like. In addition, the stick heater may be implemented as, but is not limited to, a metal wire, a metal plate on which the electrically conductive track is disposed, a ceramic heating element, or the like.

In another embodiment, the stick heater may be a heater using induction heating. For example, the stick heater may include a susceptor that generates heat through a magnetic field applied by the coil, thereby heating the aerosol generating material.

The input unit 70 may receive information input from the user or may output information to the user. For example, the input unit 70 may be a touch panel. The touch panel may include at least one touch sensor that senses touch. For example, the touch sensor may include, but is not limited to, a capacitive touch sensor, a resistive touch sensor, a surface acoustic wave touch sensor, an infrared touch sensor, and the like.

The display unit 41 and the touch panel may be implemented as one panel. For example, the touch panel may be inserted into the display unit 41 (on-cell type or in-cell type). For example, the touch panel may be added on the display unit 41 (add-on type).

Meanwhile, the input unit 70 may include, but is not limited to, a button, a keypad, a dome switch, a jog wheel, a jog switch, and the like.

The memory 60, which is hardware for storing various types of data processed in the aerosol generating device 1, may store data to be processed and data processed in the controller 13. The memory 60 may include at least one type of storage medium selected from memory of flash memory type, hard disk type, multimedia card micro type, card type (such as an SD or XD memory), random-access memory (RAM), static random-access memory (SRAM), read-only memory (ROM), electrically erasable programmable read-only storage (EEPROM), programmable read-only memory (PROM), magnetic memory, a magnetic disk, and an optical disc. The memory 60 may store an operation time of the aerosol generating device 1, a maximum number of puffs, a current number of puffs, at least one temperature profile, and data about a smoking pattern of the user, and the like.

The communication unit 50 may include at least one component for communication with another electronic device. For example, the communication unit 50 may include at least one of a short-range wireless communication unit and a wireless communication unit.

The short-range wireless communication unit may include, but is not limited to, a Bluetooth communication unit, a Bluetooth low energy (BLE) communication unit, a near field communication unit, a Wi-Fi (WLAN) communication unit, a Zigbee communication unit, an infrared data association (IrDA) communication unit, a Wi-Fi direct (WFD) communication unit, an ultra-wideband (UWB) communication unit, an Ant+ communication unit, and the like.

The wireless communication unit may include, but is not limited to, a cellular network communication unit, an Internet communication unit, a computer network (e.g., LAN or WAN) communication unit, and the like.

Although not shown in FIG. 11, the aerosol generating device 1 may further include a connection interface, such as a universal serial bus (USB) interface, and may be connected to another external device to transmit and receive information or charge the battery 12 through the connection interface, such as the USB interface.

The controller 13 may control the overall operation of the aerosol generating device 1. In an embodiment, the controller 13 may include at least one processor. The processor may be implemented as an array of multiple logic gates or may be implemented as a combination of a general-purpose microprocessor and memory having stored therein a program that can be executed on the microprocessor. In addition, it is understood by those skilled in the art that the present embodiment may be implemented in other forms of hardware.

The controller 13 may control the temperature of the stick heater by controlling the supply of the power of the battery 12 to the stick heater. The controller 13 may control the temperature of the cartridge heater and/or the stick heater based on the temperature sensed by the temperature sensor 141. The controller 13 may adjust, based on the temperature of the cartridge heater and/or the stick heater, power supplied to the cartridge heater and/or the stick heater. For example, the controller 13 may determine a target temperature for the cartridge heater and/or the stick heater based on the temperature profile stored in the memory 60.

The aerosol generating device 1 may include a power supply circuit (not shown) electrically connected to the battery 12 between the battery 12 and the cartridge heater and/or the stick heater. The power supply circuit may be electrically connected to the cartridge heater, or the stick heater. The power supply circuit may include at least one switching element. The switching element may be implemented by a bipolar junction transistor (BJT), a field effective transistor (FET), or the like. The controller 13 may control the power supply circuit.

The controller 13 may control power supply by controlling switching of the switching element of the power supply circuit. The power supply circuit may be an inverter that converts a direct current power output from the battery 12 into an alternating current power. For example, the inverter may be configured as a full-bridge circuit or a half-bridge circuit including a plurality of switching elements.

The controller 13 may turn on the switching element to supply power from the battery 12 to the cartridge heater and/or the stick heater. The controller 13 may turn off the switching element to cut off the supply of power to the cartridge heater and/or the stick heater. The controller 13 may adjust the frequency and/or duty ratio of the current pulse input to the switching element to adjust the current supplied from the battery 12.

The controller 13 may control the voltage output from the battery 12 by controlling switching of the switching element of the power supply circuit. The power conversion circuit may convert the voltage output from the battery 12. For example, the power conversion circuit may include a buck-converter that steps down the voltage output from the battery 12. For example, the power conversion circuit may be implemented by a buck-boost converter, a Zener diode, or the like.

The controller 13 may control an on/off operation of the switching element included in the power conversion circuit to adjust the level of the voltage output from the power conversion circuit. When an on state of the switching element is maintained, the level of the voltage output from the power conversion circuit may correspond to the level of the voltage output from the battery 12. The duty ratio for the on/off operation of the switching element may correspond to a ratio of the voltage output from the power conversion circuit to the voltage output from the battery 12. As the duty ratio for the on/off operation of the switching element decreases, the level of the voltage output from the power conversion circuit may decrease. The stick heater may be heated based on the voltage output from the power conversion circuit.

The controller 13 may control the stick heater to be supplied with power by using at least one of a pulse width modulation (PWM) method and a proportional-integral-differential (PID) method.

For example, the controller 13 may control a current pulse having a certain frequency and duty ratio to be supplied to the stick heater by using the PWM method. The controller 13 may control the power supplied to the stick heater by adjusting the frequency and the duty ratio of the current pulse.

For example, the controller 13 may determine a target temperature that is the target of control based on the temperature profile. The controller 13 may control the power supplied to the stick heater by using the PID method that is a feedback control method through a difference value between the temperature of the stick heater and the target temperature, a value obtained by integrating the difference value over time, and a value obtained by differentiating the difference value over the time.

The controller 13 may prevent the cartridge heater and/or the stick heater from being overheated. For example, the controller 13 may control, based on the temperature of the cartridge heater and/or the stick heater exceeding a preset limit temperature, the operation of the power conversion circuit to cut off the power supply to the cartridge heater and/or the stick heater. For example, the controller 13 may reduce, based on the temperature of the cartridge heater and/or the stick heater exceeding the preset limit temperature, the amount of power supplied to the cartridge heater and/or the stick heater by a certain ratio. For example, the controller 13 may determine that the aerosol generating material accommodated in the cartridge 19 is exhausted based on the temperature of the cartridge heater exceeding the limit temperature and may cut off the power supply to the cartridge heater.

The controller 13 may control charging and discharging of the battery 12. The controller 13 may confirm the temperature of the battery 12 based on the output signal of the temperature sensor 141.

When the power line is connected to the body electrode of the aerosol generating device 1, the controller 13 may confirm whether the temperature of the battery 12 is equal to or higher than a first limit temperature that is a reference for cutting off charging of the battery 12. The controller 13 may control, based on a preset charging current, the battery 12 to be charged when the temperature of the battery 12 is less than the first limit temperature. The controller 13 may cut off charging of the battery 12 when the temperature of the battery 12 is equal to or higher than the first limit temperature.

When the power source of the aerosol generating device 1 is in an on state, the controller 13 may confirm whether the temperature of the battery 12 is equal to or higher than a second limit temperature that is a reference for cutting off the discharge of the battery 12. The controller 13 may control to use the power stored in the battery 12 when the temperature of the battery 12 is less than the second limit temperature. The controller 13 may stop using the power stored in the battery 12 when the temperature of the battery 12 is equal to or higher than the second limit temperature.

The controller 13 may calculate the remaining capacity for the power stored in the battery 12. For example, the controller 13 may calculate the remaining capacity of the battery 12 based on the voltage and/or current sensing value of the battery 12.

The controller 13 may determine, through the insertion sensing sensor 143, whether the stick is inserted into the insertion space. The controller 13 may determine that the stick is inserted based on the output signal of the insertion sensing sensor 143. When it is determined that the stick is inserted into the insertion space, the controller 13 may control to supply power to the cartridge heater and/or the stick heater. For example, the controller 13 may supply power to the cartridge heater and/or the stick heater based on the temperature profile stored in the memory 60.

The controller 13 may determine whether the stick is removed from the insertion space. For example, the controller 13 may determine whether the stick is removed from the insertion space through the insertion sensing sensor 143. For example, the controller 13 may determine that the stick is removed from the insertion space when the temperature of the stick heater is equal to or higher than the limit temperature or when the temperature change gradient of the stick heater is equal to or higher than a set gradient. If it is determined that the stick is removed from the insertion space, the controller 13 may cut off the supply of power to the cartridge heater and/or the stick heater.

The controller 13 may control the power supply time and/or the power supply amount to the stick heater according to the state of the stick sensed by the sensor unit 14. The controller 13 may confirm, based on a lookup table, a level range in which the level of the signal of the capacitance sensor is included. The controller 13 may determine the amount of moisture of the stick according to the identified level range.

When the stick is in an over-humidified state, compared to a normal state, the controller 13 may control the power supply time to the stick heater to increase a preheating time of the stick.

The controller 13 may determine, through the reuse sensing sensor 144, whether to reuse the stick inserted into the insertion space. For example, the controller 13 may compare the sensing value of the signal of the reuse sensing sensor 144 with a first reference range including the first color and may determine that the stick is not used when the sensing value is included in the first reference range. For example, the controller 13 may compare the sensing value of the signal of the reuse sensing sensor 144 with a second reference range including the second color and may determine that the stick is used when the sensing value is included in the second reference range. When it is determined that the stick is used, the controller 13 may cut off the supply of power to the cartridge heater and/or the stick heater.

The controller 13 may determine whether the cartridge 19 is engaged and/or disengaged through the cartridge sensing sensor 145. For example, the controller 13 may determine whether to engage or disengage the cartridge 19 based on the sensing value of the signal of the cartridge sensing sensor 145.

The controller 13 may determine whether the aerosol generating material of the cartridge 19 is exhausted. For example, the controller 13 may preheat the cartridge heater and/or the stick heater by applying power, determine whether the temperature of the cartridge heater exceeds the limit temperature in the preheating section, and determine that the aerosol generating material of the cartridge 19 is exhausted when the temperature of the cartridge heater exceeds the limit temperature. When it is determined that the aerosol generating material of the cartridge 19 is exhausted, the controller 13 may cut off the supply of power to the cartridge heater and/or the stick heater.

The controller 13 may determine whether the cartridge 19 is available. For example, the controller 13 may determine, based on data stored in the memory 60, that the cartridge 19 is unavailable when the current number of puffs is greater than or equal to the maximum number of puffs set in the cartridge 19. For example, the controller 13 may determine that the cartridge 19 is unavailable when the total time during which the cartridge heater is heated is greater than or equal to the preset maximum time or the total power supplied to the cartridge heater is greater than or equal to the preset maximum power.

The controller 13 may perform determination on the user's inhalation through the puff sensor 142. For example, the controller 13 may determine whether a puff is generated based on the sensing value of the signal of the puff sensor 142. For example, the controller 13 may determine the intensity of the puff based on the sensing value of the signal of the puff sensor 142. When the number of puffs reaches a preset maximum number of puffs or when no puffs are sensed for more than a preset time, the controller 13 may cut off the supply of power to the cartridge heater and/or the stick heater.

The controller 13 may determine whether to engage and/or disengage the cap through the cap sensing sensor 146. For example, the controller 13 may determine whether to engage or disengage the cap based on the sensing value of the signal of the cap sensing sensor 146.

The controller 13 may control the output unit 40 based on a result sensed by the sensor unit 14. For example, when the number of puffs counted by the puff sensor 142 reaches a preset number of times, the controller 13 may notify the user that the aerosol generating device 1 is about to end through at least one of the display unit 41, the haptic unit 42, and the audio output unit 43. For example, the controller 13 may notify the user through the output unit 40 based on a determination that the stick is not present in the insertion space. For example, the controller 13 may notify the user through the output unit 40 based on a determination that the cartridge 19 and/or the cap is not mounted. For example, the controller 13 may communicate information about the temperature of the cartridge heater and/or the stick heater to the user through the output unit 40.

The controller 13 may store and update, based on occurrence of a certain event, a history of the event that has occurred in the memory 60. The event may include insertion sensing of the stick, heating initiation of the stick, sensing of a puff, ending of a puff, overheat sensing of the cartridge heater and/or the stick heater, sensing of overvoltage application to the cartridge heater, and/or the stick heater, heating ending of the stick, operations of the aerosol generating device 1, such as power on/off, charge initiation of the battery 12, overcharge sensing of the battery 12, charge ending of the battery, and the like, performed in the aerosol generating device 1. The history for the event may include a date and time when the event occurred, log data corresponding to the event, and the like. For example, when the certain event is insertion sensing of the stick, log data corresponding to the event may include data on the sensing value of the insertion sensing sensor 143. For example, when the certain event is overheating sensing of the cartridge heater and/or the stick heater, log data corresponding to the event may include data on a temperature of the cartridge heater and/or stick heater, a voltage applied to the cartridge heater and/or stick heater, a current flowing through the cartridge heater and/or stick heater, and the like.

The controller 13 may control to form a communication link with an external device such as a mobile terminal of the user. Upon receiving data regarding authentication from the external device through the communication link, the controller 13 may release the restriction on the use of at least one function of the aerosol generating device 1. The data regarding authentication may include data indicating completion of user authentication for the user corresponding to the external device. The user may perform user authentication through the external device. The external device may determine whether the user data is valid based on a birthday of the user, a unique number indicating the user, or the like, and may receive data about the usage permission of the aerosol generating device 1 from an external server. The external device may transmit, based on the data about the usage permission, data indicating completion of user authentication to the aerosol generating device 1. When the user authentication is completed, the controller 13 may release the restriction on the use of at least one function of the aerosol generating device 1. For example, the controller 13 may release the restriction on the use of the heating function for supplying power to the stick heater when the user authentication is completed.

The controller 13 may transmit data on the state of the aerosol generating device 1 to the external device through the communication link formed with the external device. The external device may output, based on the received state data, the remaining capacity, and the operation mode of the battery 12 of the aerosol generating device 1 through a display of the external device.

The external device may transmit a location search request to the aerosol generating device 1, based on the input that initiates the location search of the aerosol generating device 1. When receiving the location search request from the external device, the controller 13 may control, based on the received location search request, at least one of the output devices to perform an operation corresponding to the location search. For example, the haptic unit 42 may generate vibrations in response to the location search request. For example, the display unit 41 may output an object corresponding to the location search and the search completion in response to the location search request.

Upon receiving firmware data from the external device, the controller 13 may control to perform a firmware update. The external device may confirm a current version of firmware of the aerosol generating device 1 and determine whether there is a new version of firmware. When an input requesting a firmware download is received, the external device may receive a new version of firmware data and transmit the new version of firmware data to the aerosol generating device 1. The controller 13 may control the firmware update of the aerosol generating device 1 to be performed upon receiving the new version of the firmware data.

The controller 13 may transmit data about the sensing value of at least one sensor unit 14 to the external server (not shown) through the communication unit 50 and may receive and store a learning model generated by learning the sensing value from the server through machine learning, such as deep learning. The controller 13 may use the learning model received from the server to perform an operation of determining the user's inhalation pattern, an operation of generating the temperature profile, and the like. The controller 13 may store, in the memory 60, sensing value data of at least one sensor unit 14, data for learning an artificial neural network (ANN), and the like. For example, the memory 60 may store a database for each component provided in the aerosol generating device 1 for learning the ANN, and weights and biases constituting the ANN. The controller 13 may learn the data about the sensing value of at least one sensor unit 14, the inhalation pattern of the user, the temperature profile, and the like stored in the memory 60 to generate at least one learning model used for determining the inhalation pattern of the user, generating the temperature profile, or the like.

Certain embodiments or other embodiments of the present disclosure described above are neither exclusive nor distinct from each other. Certain embodiments or other embodiments of the present disclosure described above may be combined or used in combination with each component or function.

For example, this means that a component A described in a particular embodiment and/or drawing may be combined with component B described in another embodiment and/or drawing That is, although the coupling between the components is not directly described, it implies that the coupling is possible, except in cases where the coupling is described as impossible.

The detailed description should be construed as illustrative rather than restrictive. The scope of the present disclosure should be determined by the reasonable interpretation of the appended claims, and all changes that come within the equivalent scope of the present disclosure are intended to be included within the scope of the present disclosure.

## Claims

1. An aerosol generating device, comprising:
a body that comprises an article accommodating unit for accommodating an aerosol generating article and forms an exterior thereof;
a heater for heating the aerosol generating article accommodated in the article accommodating unit;
a battery coupling unit arranged in one area inside the body; and
a battery detachably coupled to the battery coupling unit,
wherein the battery comprises a first electrode and a second electrode having an opposite polarity to that of the first electrode, and
the first electrode and the second electrode are disposed on a same first surface of the battery.

2. The aerosol generating device of claim 1, wherein the battery coupling unit comprises a first electrode receiving groove and a second electrode receiving groove for accommodating portions of the first electrode and the second electrode, respectively.

3. The aerosol generating device of claim 2, wherein a first body electrode electrically connected to the first electrode is received in the first electrode receiving groove, and a second body electrode electrically connected to the second electrode is received in the second electrode receiving groove.

4. The aerosol generating device of claim 3, further comprising a plurality of elastic bodies connected to each of the first body electrode and the second body electrode, wherein the plurality of elastic bodies apply an elastic force such that the first body electrode and the second body electrode are pressed toward the battery.

5. The aerosol generating device of claim 1, further comprising a sealing member that is positioned between the battery coupling unit and the battery and exposes the first electrode and the second electrode.

6. The aerosol generating device of claim 5, wherein the sealing member exposes a second side surface opposite the first side surface.

7. The aerosol generating device of claim 1, further comprising a battery cover that selectively opens or closes the battery coupling unit.

8. The aerosol generating device of claim 1, wherein the battery comprises:
a battery cell; and
a battery control circuit electrically connecting the first electrode and the second electrode to the battery cell, wherein the battery control circuit electrically disconnects the first electrode and the second electrode from the battery cell when the battery is disconnected from the battery coupling unit.

9. The aerosol generating device of claim 8, wherein the body includes a built-in magnet, and the battery control circuit comprises:
a Hall sensor that senses a magnetic field; and
a switching circuit electrically connecting the first electrode and the second electrode to the battery cell in response to the Hall sensor sensing the magnetic field.

10. The aerosol generating device of claim 9, wherein the Hall sensor comprises a Hall sensor transistor that is turned on when the magnetic field of a certain reference value or greater is sensed.

11. The aerosol generating device of claim 10, wherein the switching circuit comprises a switch element that electrically connects the first electrode and the second electrode to the battery cell in response to the Hall sensor transistor being turned on, and electrically disconnects the first electrode and the second electrode from the battery cell in response to the Hall sensor transistor being turned off.
